(19) Europäisches Patentamt
European Patent Office
Office européen des brevets

(11) Veröffentlichungsnummer: **0 055 222 A2**

# (12) EUROPÄISCHE PATENTANMELDUNG

(21) Anmeldenummer: **81810509.0**

(22) Anmeldetag: **21.12.81**

(51) Int. Cl.³: **C 09 B 1/26**, C 09 B 69/06, D 01 F 1/06

(30) Priorität: **24.12.80 CH 9573/80**

(43) Veröffentlichungstag der Anmeldung: **30.06.82 Patentblatt 82/26**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Loew, Peter, Dr., Concordiastrasse 23, CH-4142 Münchenstein (CH)**

(54) **Salze kationischer Anthrachinonfarbstoffe, deren Herstellung und Verwendung.**

(57) Monokationische Farbsalze der Formel

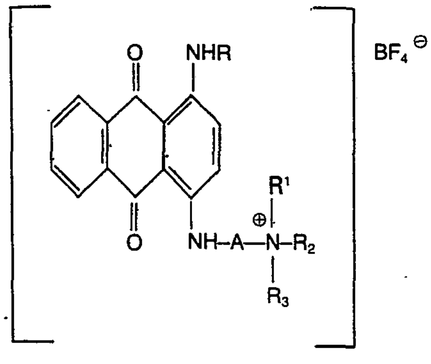

(I),

worin R H, Alkyl, Aryl, Aralkyl oder Cycloalkyl, A Alkylen, Arylen oder Aralkylen, $R_1$, $R_2$, $R_3$ Alkyl oder Aralkyl bilden. Die Farbsalze eignen sich vorzüglich für die Spinnfärbung von Polyacrylnitril. Man erhält reinblau gefärbte transparente Fasern mit ausgezeichneter Echtheit.

EP 0 055 222 A2

3-13226/=

# Salze kationischer Anthrachinonfarbstoffe, deren Herstellung und Verwendung

In der DE-PS 2.117.251 sind Salze kationischer Anthrachinonfarbstoffe mit anorganischen Säuren, beispielsweise der Chlor-, Brom- oder Jodwasserstoff-, Phosphor- oder Schwefelsäure beschrieben. Diese Salze eignen sich zwar gut zum Färben von Polyacrylnitrilfasern aus wässrigem Bade, deren Verwendung für die Spinnfärbung von Polyacrylnitril ist jedoch mit erheblichen Nachteilen verbunden.

Es wurde nun gefunden, dass sich die Tetrafluorboratsalze monokationischer Anthrachinonfarbstoffe der Formel

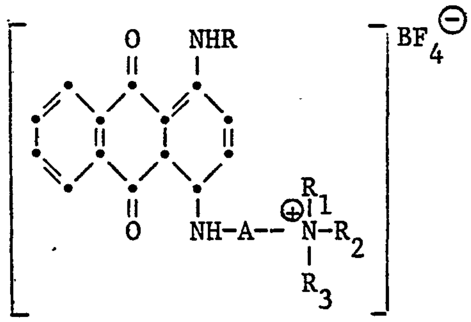

(I),

worin R H, Alkyl, Aryl, Aralkyl oder Cycloalkyl, A Alkylen, Arylen oder Aralkylen, $R_1$, $R_2$, $R_3$ Alkyl oder Aralkyl bedeuten, sich hervorragend zur Spinnfärbung von Polymeren des Acrylnitril oder Mischpolymeren mit überwiegendem Acrylnitrilanteil eignen.

In den Farbsalzen der Formel I ist R vorzugsweise ein geradkettiger oder verzweigter Alkylrest mit 1-6 C-Atomen, beispielsweise ein Methyl-, Alkyl-, n-Propyl-, Isopropyl-, n-Butyl-, Isobutyl- oder n-Hexylrest. Steht R für Cycloalkyl, dann vorzugsweise für Cyclohexyl. Ist R Aryl, dann beispielsweise α- oder β-Naphthyl, vorzugsweise aber ein gegebenenfalls durch Halogen, Alkyl oder Alkoxy mit 1-4 C-Atomen substituierter Phenylrest.

A bedeutet vorzugsweise $C_2$-$C_6$-Alkylen, wobei die Kette gerade oder verzweigt sein kann. Als Beispiele seien genannt: 1,2-Alkylen, 1,3-Propylen, 2-Methyl-1,2-äthylen, 1,4-Butylen, 2-Methyl-1,3-propylen, 2,2-Dimethylpropylen oder 1,6 Hexylen. $R_1$ und $R_2$ bedeuten vorzugsweise $C_1$-$C_4$-Alkylgruppen, $R_3$ $C_1$-$C_4$ Alkyl oder $C_1$-$C_2$ Alkylphenyl, beispielweise Benzyl.

Die neuen Farbsalze erhält man zweckmässig durch Umsetzen eines Farbsalzes der Formel

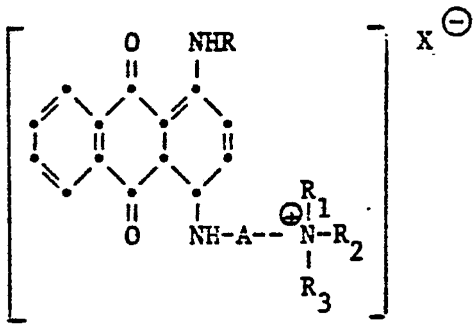

(II)

worin X ein wasserlöslich machendes Anion bedeutet, in wässriger Lösung mit $NaBF_4$. Als wasserlöslich machende Anionen dienen vorzugsweise die Chloride, Bromide, Sulfate, Methylsulfate oder Acetate. Dank ihrer Schwerlöslichkeit fallen die Tetrafluorborate aus. Die Ausgangssalze stellen bekannte Verbindungen dar, die beispielsweise nach dem Verfahren der DE-AS 1.150.652 oder 2.117.251 durch Behandeln der tertiären Basen mit Quaternierungsmitteln, wie z.B. Dimethylsulfat oder Benzylchlorid hergestellt werden.

Für die Anwendung werden die erfindungsgemässen Farbsalze zweckmässig in dem zum Lösen des Polyacrylnitrils verwendeten Lösungsmittel, wie Dimethylformamid, Dimethylacetamid oder Dimethylsulfoxid, gelöst, dann der Spinnlösung zugegeben, das Gemisch homogenisiert und dann in der üblichen Weise, wie beispielsweise nach dem Trocken-Spinnverfahren, oder nach dem Nass-Spinn-Verfahren, verspinnt und die so hergestellten Fasern wie üblich behandelt.

Die erfindungsgemässen Farbsalze besitzen in den genannten Lösungsmitteln bereits bei Raumtemperatur eine sehr hohe Löslichkeit, so dass sie vorteilhaft auch in Form von konzentrierten Lösungen, die vorzugsweise etwa 5 bis 40 Gew.% Farbstoff enthalten, eingesetzt werden können, wobei durch Temperaturerhöhung die Löslichkeit der Farbstoffe nochmals beträchtlich gesteigert werden kann. Zudem besitzen sie dank des relativ kleinen Anions eine hohe Farbstärke, was ein sehr oekonomisches Färben erlaubt.

Ausser dem Polymeren des Acrylnitrils kommen als zu verspinnendes Substrat Mischpolymerisate des Acrylnitrils mit anderen Vinyl-Verbindungen, wie beispielsweise mit Vinylchlorid,Vinylfluorid,Vinylidenchlorid, Vinylacetat oder -propionat, Vinylpyridin, Vinylimidazol, Vinylpyrrolidon, Vinylalkohol, Acryl- oder Methacrylsäureestern oder Acrylamiden in Betracht, wobei diese Mischpolymerisate mindestens 70 Gew.% an Acrylnitril aufweisen müssen und weiterhin saure Gruppen enthalten, die als Endgruppen in das Polymere mittels eines Katalysators eingeführt oder mittels solche saure Gruppen enthaltenden Comonomeren einpolymerisiert oder aufgepfropft wurden.

Nach dem erfindungsgemässen Verfahren erhält man völlig transparente, stippenfreie Spinnlösungen, die keine Verstopfung oder mechanische Abnutzung der Spinndüsen verursachen. Die beim Verspinnen erhaltenen Fäden bzw. Fasern zeigen durch die weitgehend molekulardisperse Verteilung des erfindungsgemäss verwendeten Farbstoffes im Gegensatz zu den zur Zeit meistens eingesetzten Farbpigmenten keine Mattierungserscheinungen. Weiterhin besitzen die mit dem erfindungsgemäss ver-

wendeten Farbstoffe gemäss dem erfindungsgemässen Verfahren gefärbten Materialien eine sehr hohe Nassechtheit. Durch das Fehlen von Farbstoff-Aggregaten an den Faseroberflächen, wie sie beim Spinnfärben mit Farbpigmenten auftreten können, besitzen die erfindungsgemäss erhaltenen Fasern ebenfalls eine ausserordentlich gute Reibechtheit. Ausserdem ist allgemein die ausgezeichnete Thermofixierechtheit, Dämpf-, Wasch- und Lichtechtheit hervorzuheben.

Da die erfindungsgemäss verwendeten Tetrafluorborat-Farbstoffsalze sich aus den wässrigen Lösungen, wie sie bei der Farbstoffsynthese entstehen, sehr gut in grobkristalliner Form und weitgehend salzfrei abscheiden lassen, hat die Verwendung von Spinnlösungen, die diese Farbstoffe enthalten, den besonderen Vorteil, dass anorganische Begleitsalze in den als Spinnflüssigkeit verwendeten aprotischen Lösungsmitteln vor dem Verspinnen nicht erst abgetrennt werden müssen, so dass insbesondere zusätzliche verfahrenstechnische Massnahmen vermieden werden. Die ausserordentlich geringe Wasserlöslichkeit der erfindungsgemässen Farbsalze ist zudem ein Vorteil im Hinblick auf das Ausbluten der Farbstoffe im wässrigen Fällbad.

<u>Beispiel 1</u>: 240 g des Farbstoffes der Formel

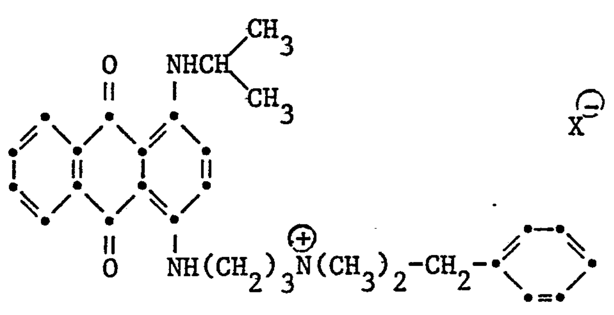

($X=OCOCH_3$) werden in 1400 ml verdünnter Essigsäure gelöst und die Lösung in 72.6 g $NaBF_4$, gelöst in 900 ml Wasser eingetropft. Das ausgefallene Salz ($X = BF_4$) wird abfiltriert und getrocknet. Man erhält 263 g eines blauen Pulvers, welches praktisch unlöslich in Wasser, aber gut löslich in Dimethylformamid ist. Man erhält damit blaue spinngefärbte PAN-Fasern von ausgezeichneter Echtheit.

Beispiele 2-11: In der nachfolgenden Tabelle sind weitere Farbsalze aufgeführt, die man erhält, wenn man ein Farbsalz aus einem 1,4-Diaminoanthrachinon der Formel

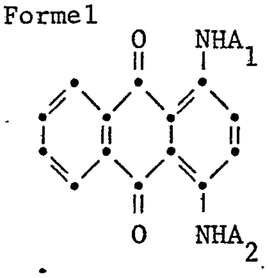

,

worin $A_1$ die in Kolonne 2 und $A_2$ die in Kolonne 3 angegebenen Bedeutungen haben, und dem in Kolonne 4 angegebenen Anion nach den Angaben des Beispiels 1 mit Natriumtetrafluorborat umsetzt. Man erhält stets blaue spinngefärbte PAN-fasern.

Tabelle

| Bsp. | $A_1$ | $A_2$ | Anion |
|---|---|---|---|
| 2 | $-CH_3$ | $-(CH_2)_3\overset{\oplus}{N}(CH_3)_2CH_2-C_6H_3$ | $Cl^{\ominus}$ |
| 3 | " " | $-(CH_2)_3\overset{\oplus}{N}(CH_3)_3$ | $-SO_4CH_3^{\ominus}$ |
| 4 | $-CH(C_2H_5)_2$ | $-(CH_2)_3\overset{+}{N}(C_2H_5)_2CH_2C_6H_5$ | $Cl^{\ominus}$ |
| 5 | 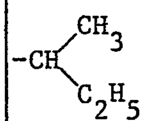 | $-(CH_2)_2\overset{\oplus}{N}(CH_3)_3$ | $SO_4CH_3^{\ominus}$ |
| 6 | $-CH(CH_3)_2$ | $-(CH_2)_3\overset{\oplus}{N}(C_2H_5)_3$ | $SO_4C_2H_5^{\ominus}$ |
| 7 | $-C_2H_5$ | 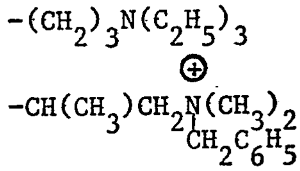 | $Br^{\ominus}$ |
| 8 | 2,4-Dimethylphenyl | $-(CH_2)_3\overset{\oplus}{N}(CH_3)_3$ | $SO_4CH_3^{\ominus}$ |
| 9 | H | 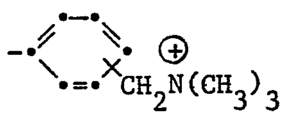 | " |
| 10 | 4-Methylphenyl | $-(CH_2)_3\overset{\oplus}{N}(CH_3)_2CH_2C_6H_5$ | $Cl^{\ominus}$ |
| 11 | 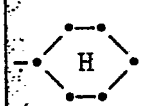 | $-CH_2CH_2\overset{\oplus}{N}(CH_3)_3$ | $SO_4CH_3^{\ominus}$ |
| 12 | $-CH(CH_3)_2$ | $-(CH_2)_3\overset{\oplus}{N}(CH_3)_3$ | $SO_4CH_3^{\ominus}$ |
| 13 | $-CH(CH_3)_2$ | $-(CH_2)_2\overset{\oplus}{N}(CH_3)_2CH_2C_6H_5$ | $Cl^{\ominus}$ |

Beispiel 12: Zu 100 Teilen einer 30%igen Lösung eines sauermodifizierten Polyacrylnitrils in Dimethylformamid werden 5 Teile einer 5%igen Lösung des gemäss Beispiel 1 erhaltenen Farbsalzes in Dimethylformamid gegeben. Die zu verspinnende Lösung wird homogenisiert und nach einem in der Technik üblichen und bekannten Trockenspinnverfahren versponnen.

Man erhält Fäden in einem kräftigen Blauton, welche sich zusätzlich durch einen hohen Glanz auszeichnen. Die Echtheiten, insbesondere die Lichtechtheit, Reibechtheit, Thermofixierechtheit, Waschechtheit und Dämpfechtheit sind ausserordentlich hoch.

Führt man die Faserherstellung nach einem in der Technik üblichen Nass-Spinnverfahren durch, erhält man gefärbte Fäden von gleich guten Eigenschaften. Die Fäll- und Verstreckbäder werden nur äusserst geringfügig angefärbt.

Verwendet man anstelle des obengenannten Farbstoffes die in den Beispielen 2-11 der Tabelle aufgeführten Farbstoffe, so erhält man gleichfalls kräftige Blaufärbungen mit hohen Echtheiten.

Patentansprüche

1. Monokationische Farbsalze der Formel

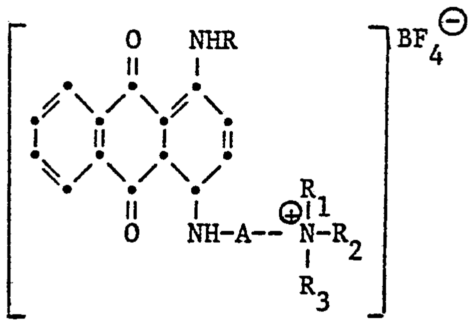

(I),

worin R H, Alkyl, Aryl, Aralkyl oder Cycloalkyl, A Alkylen, Arylen oder Aralkylen, $R_1$,$R_2$, $R_3$ Alkyl oder Aralkyl bilden.

2. Farbsalze gemäss Anspruch 1, worin R $C_1$-$C_6$ Alkyl bedeutet.

3. Farbsalze gemäss Anspruch 1, worin R einen verzweigten Alkylrest bedeutet.

4. Farbsalze gemäss Anspruch 1, worin A $C_2$-$C_4$-Alkylen bedeutet.

5. Farbsalze gemäss Anspruch 1, worin $R_1$ und $R_2$ $C_1$-$C_4$-Alkyl und $R_3$ $C_1$-$C_4$-Alkyl oder Benzyl bedeuten.

6. Verfahren zur Herstellung von Farbsalzen gemäss Anspruch 1, dadurch gekennzeichnet, dass man ein Farbsalz der Formel

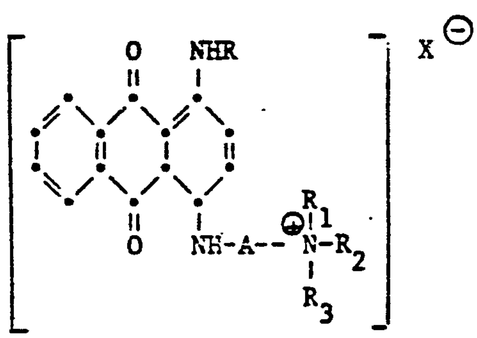

(II)

worin X ein wasserlöslich machendes Anion bedeutet, in wässriger Lösung mit $NaBF_4$ umsetzt.

7. Verfahren gemäss Anspruch 6, dadurch gekennzeichnet, dass man von Salzen der Formel II ausgeht, worin X Cl, $SO_4CH_3$ oder $CH_3COO$ bedeutet.

8. Verfahren zum Spinnfärben von Polymeren des Acrylnitrils oder Mischpolymeren mit überwiegendem Acrylnitrilanteil, dadurch gekennzeichnet, dass man der Spinnlösung ein Farbsalz gemäss Anspruch 1 zusetzt.

9. Spinngefärbte Fasern von Polymeren des Acrylnitrils oder Mischpolymeren mit überwiegendem Acrylnitrilanteil, enthaltend ein Farbsalz gemäss Anspruch 1.